# EUROPÄISCHE PATENTSCHRIFT

(11) **EP 1 341 284 B1**
(45) Veröffentlichungstag und Bekanntmachung des Hinweises auf die Patenterteilung: **30.04.2008**
(21) Anmeldenummer: 02405148.4
(22) Anmeldetag: 01.03.2002
(51) Int. Cl.: H02H 1/00

(54) **Plausibilitätsprüfung von Spannungswandlern in Unterstationen**
Plausibility check for voltage transformers in power distribution substations
Test de validité pour les transformateurs de tension dans les sous-stations de distribution d'energie

(43) Veröffentlichungstag der Anmeldung: 03.09.2003
(73) Patentinhaber: ABB Schweiz AG, 5400 Baden (CH)
(72) Erfinder: Wimmer, Wolfgang, 5323 Rietheim (CH)
(74) Vertreter: ABB Patent Attorneys

(56) Entgegenhaltungen:
- EP-A- 1 069 518
- AGGARWAL ET AL: "A practical approach to accurate fault location on extra high voltage teed feeders" IEEE TRANSACTIONS ON POWER DELIVERY, Bd. 8, Nr. 3, Juli 1993 (1993-07), Seiten 874-882, XP000403080 new york us

## Beschreibung

### TECHNISCHES GEBIET

Die Erfindung bezieht sich auf das Gebiet der Anlagenleittechnik, insbesondere der Anlagenleittechnik für Hoch-, Mittel- oder Niederspannungsschaltanlagen. Sie geht aus von einem Verfahren, einem Computerprogrammprodukt, einem Computerprogramm und einer Vorrichtung zur Plausibilitätsüberprüfung von Spannungswandlern in einer elektrischen Schaltanlage sowie von einer Schaltanlage mit einer solchen Vorrichtung gemäss Oberbegriff der unabhängigen Patentansprüche.

### STAND DER TECHNIK

Ein Energieverteilnetz umfasst Unterstationen oder elektrische Schaltanlagen, insbesondere Hoch- oder Mittelspannungsschaltanlagen, die durch ein verteiltes Anlagenleitsystem gesteuert werden. Die Unterstationen umfassen Primär- oder Feldgeräte, z. B. Schalter, Antriebe, Generatoren, Transformatoren, Spannungs- und Stromwandler. Das Anlagenleitsystem weist beispielsweise Feldleitgeräte und eine Bedienstation auf, die durch verschiedene Kommunikationsbusse und Buskoppler miteinander verbunden sind. Die Feldleitgeräte steuern, regeln, überwachen und schützen die Feldgeräte der Anlage.

Spannungswandler in Unterstationen messen die Anlagenspannungen an vorgegebenen Messstellen der Schaltanlage mit einer gewissen Messungenauigkeit. Die Spannungsmesswerte werden gefiltert, in Primärspannungswerte der Anlage skaliert, gegebenenfalls digitalisiert, als Spannungsmesssignale vom Anlagenleitsystem erfasst und auf einer Anzeige dargestellt und/oder für Verrechnungszwecke verwendet. Eine zusätzliche Änderungsraten-Filterung für Kommunikationszwecke kann z. B. eine zeitliche Mittelung durch Integration oder einen Algorithmus zur Entscheidung über Aktualisieren oder Beibehalten und Senden oder Nichtsenden des Spannungswerts umfassen. Sowohl die vom Spannungswandler erfassten Messwerte als auch die Parameter der Filterung und Skalierung, d. h. die sogenannte Parametrisierung der Messwerte, kann fehlerbehaftet sein. Primärfehler im Spannungswandler selber entstehen z. B. durch defekte Teile oder Materialermüdung. Fehler in der Parametrisierung können in der Elektronik durch äussere Einflüsse, Alterung, Drift, Fehler des Bedienungspersonals O. ä. verursacht sein.

Es ist bekannt, für Schutzzwecke und für den Synchrocheck die Spannungswandler-Sicherung zu überwachen und auch lokale Plausibilitätstests an einem isolierten Punkt der Anlage zu machen. Die bekannten, auf eine einzelne Messstelle bezogenen Plausibilitätstests sind ein Vergleichstest von Strom- und Spannungswerten, eine Überprüfung der Phasensequenz der Phasenspannungen, ein Phasen-Symmetrietest oder ein Spannungs-Symmetrietest. Beim Vergleichstest können grobe Inkonsistenzen zwischen Spannungs- und Stromwerten an der Messstelle aufgedeckt werden. Bei der Überwachung der Phasensequenz können Inkonsistenzen zwischen Spannungsverläufen unterschiedlicher Phasen an der Messstelle entdeckt werden. Beim Phasen-Symmetrietest werden Spannungsmaxima aller drei Phasen an der Messstelle hinsichtlich ihrer Phasenlage zueinander geprüft und Abweichungen von einer maximalen Phasenverschiebung detektiert. Dieser Test funktioniert nur, wenn nicht zu grosse Maximalwerte für die zulässige Asymmetrie angegeben werden können. Dieser Test ist ausserdem normalerweise nicht möglich, wenn Transducer für die Digitalisierung der Spannungen eingesetzt werden, weil diese statt der benötigten Momentanwerte zeitgemittelte RMS-Werte der Spannung, Leistung, Frequenz oder des Phasenwinkels liefern. Beim Spannungs-Symmetrietest werden alle Phase-Phase Spannungen und die Nullspannung aufsummiert und Abweichungen vom Idealwert Null überwacht. Diese lokalen Plausibilitätstests sind relativ grob und erlauben nur einen ja/nein-Entscheid über die Funktionsfähigkeit des Spannungswandlers oder der Spannungswandler an der Messstelle. Ein Verlust an Messgenauigkeit oder eine falsche Skalierung können hingegen nicht detektiert werden.

Auf Netzleitebene sind bei einer sogenannten Zustandsschätzung ("state estimation") auch Plausibilitätstests auf Leistungs- und Spannungswerte bekannt, um z. B. Inkonsistenzen wegen Messungen zu unterschiedlichen Zeitpunkten oder wegen Messfehlern auszugleichen. Solche Plausibilitätstests, wie beschrieben im Dokument "A pratical approach to accurate fault location on extra high voltage teed feeders", Autor Aggarwal et al, veröffentlicht in 8047c IEEE Transactions on Power Delivery, Nummer 3, New York, VS Juli 1993, sind jedoch zur Entdeckung von Genauigkeitsoder Skalierungsproblemen bei Spannungswandlern ungeeignet, weil es praktisch unmöglich ist, den wahren Grund für die Abweichung zu identifizieren. Zudem ist eine Zustandsschätzung sowohl von der benötigten Rechenleistung als auch von der Konfiguration her zu aufwendig, um nur zur Erkennung von Spannungswandlerproblemen in einer Unterstation eingesetzt zu werden.

### DARSTELLUNG DER ERFINDUNG

Aufgabe der vorliegenden Erfindung ist es, ein Verfahren, ein Computerprogrammprodukt, ein Computerprogramm, eine Vorrichtung und eine Schaltanlage mit einer solchen Vorrichtung zur verbesserten und vereinfachten Überwachung von Spannungswandlern in elektrischen Schaltanlagen anzugeben. Diese Aufgabe wird erfindungsgemäss durch die Merkmale der unabhängigen Ansprüche gelöst.

In einem ersten Aspekt besteht die Erfindung in einem Verfahren zur Plausibilitätsüberprüfung von Spannungswandlern in einer elektrischen Schaltanlage, insbesondere einer Hoch- oder Mittelspannungsschaltanlage, wobei die Schaltanlage durch ein Anlagenleitsystem gesteuert wird und Messsignale von an mindestens zwei unterschiedlichen Messstellen angeordneten Spannungswandlern vom Anlagenleitsystem verarbeitet werden, wobei folgende Schritte zur Plausibilitätsprüfung der Spannungswandler ausgeführt werden: (i) Erfassen einer momentane Topologie der Schaltanlage aufgrund der vorhandenen elektrischen Verbindungen von Primärgeräten und aufgrund momentaner Stellungen von Schaltern durch das Anlagenleitsystem; (ii) aufgrund der momentanen Topologie Identifizieren mindestens eines Teilbereichs der Schaltanlage, der mindestens zwei galvanisch zusammenhängende Spannungswandler (8) aufweist; (iii) innerhalb des Teilbereichs Einteilen der Spannungswandler aufgrund ihrer Messsignale in Gruppen, wobei in jeder Gruppe alle Messsignale im Rahmen der erlaubten Messungenauigkeiten übereinstimmen; und (iv) Erzeugen eines Anzeige- oder Alarmsignals durch das Anlagenleitsystem, falls mehr als eine Gruppe vorhanden ist. Durch die Kategorisierung der Spannungswandler aufgrund ihrer Messsignale in Gruppen kann ohne Kenntnis der korrekten Spannungen alleine durch einen relativen Vergleich der Messsignale von räumlich getrennten Spannungswandlern ein Zustand der Spannungswandler und gegebenenfalls der Schaltanlage abgeschätzt werden. Durch das Auftreten mehrerer Gruppen wird feststellbar, dass Inkonsistenzen zwischen den Messwerten der Spannungswandler bestehen und es wird eine entsprechende Meldung zuhanden des Anlagenleitsystems oder des Bedienungspersonals erzeugt. Das Verfahren ist unabhängig von der Konfiguration oder dem Netzwerk-Schema der Primärgeräte der Schaltanlage und insbesondere unabhängig von der Komplexität ihrer Vernetzung und kann daher ohne wesentliche Anpassungen für beliebige Schemata implementiert werden. Das Verfahren ist auch unabhängig vom momentanen Betriebszustand der Schaltanlage und kann insbesondere auch bei schwankender Sollspannung durchgeführt werden. Die Topologieverfolgung geschieht dynamisch, d. h. die Topologie oder die Einteilung in Teilbereiche wird laufend oder bei Bedarf aktualisiert. Insbesondere kann sie sich durch Schalthandlungen ändern. Jeder Teilbereich stellt einen topologischen Teil der Schaltanlage dar, der eine charakteristische Sollspannung und eine bei Systemfehlern davon abweichende Istspannung aufweist. Vorteilhaft ist auch, dass auf bereits im Anlagenleitsystem verfügbare Messsignale der Spannungswandler zugegriffen werden kann. Das Verfahren ist auch kompatible mit herkömmlichen lokalen Plausibilitätstests für Spannungswandler. Im Gegensatz zu diesen erlaubt es, auch geringe Abweichungen oder Fehler in der Skalierung von Spannungswandlern zu detektieren. Darüberhinaus können primärseitige gröbere Fehler oder Defekte an Spannungswandlern erkannt werden.

In einem bevorzugten Ausführungsbeispiel wird bei Vorhandensein des Anzeige- oder Alarmsignals eine Anzahl Spannungswandler in jeder Gruppe bestimmt und werden folgende Kriterien zur Zustandsbeurteilung der Spannungswandler angewandt: (i) Sind genau zwei Gruppen vorhanden und enthält die erste Gruppe genau einen Spannungswandler und die zweite Gruppe mehr als einen Spannungswandler , dann wird der Spannungswandler der ersten Gruppe als problematisch identifiziert und mit einer Alarmmeldung versehen; und/oder (ii) Sind mindestens zwei gleich grosse Gruppen oder mehr als zwei Gruppen vorhanden, dann werden alle Spannungswandler als problematisch identifiziert; und/oder (iii) Sind eine grösste Gruppe mit mehreren Spannungswandlern und mehrere Gruppen mit jeweils genau einem Spannungswandler vorhanden, dann werden alle Spannungswandler der grössten Gruppe als fehlerfrei und die anderen Spannungswandler als problematisch identifiziert. Diese Regeln zur Zustandsbeurteilung sind sehr einfach und erlauben trotzdem eine zuverlässige Überprüfung der Spannungswandler und Schaltanlage mit wenig Rechenaufwand und ohne zusätzlichen Messaufwand bei den Spannungswandlern. Insbesondere muss kein korrektes oder absolutes Spannungsniveau bekannt sein oder geschätzt werden.

In einem weiteren Ausführungsbeispiel bestehen weitere Kriterien zur Zustandsbeurteilung der Spannungswandler und/oder der Schaltanlage: (i) Sind genau eine grössere und genau eine kleinere Gruppe von Spannungwandlern vorhanden und hat die kleinere Gruppe mehr als einen Spannungswandler, dann wird der Teilbereich der Schaltanlage als problematisch identifiziert; und/oder (ii) Ist genau eine Gruppe mit mehreren Spannungswandlern vorhanden, die eine nicht verschwindende Spannung aufweisen oder deren gemittelte Gruppenspannung ungleich Null ist, dann werden alle Warnmeldungen und/oder Alarmmeldungen für die Spannungswandler der Gruppe oder des Teilbereichs und gegebenenfalls für den Teilbereich selber zurückgesetzt.

Die Ausführungsbeispiele gemäss Anspruch 4 haben den Vorteil, dass die Schwere des bei problematischen Spannungswandlern zugundeliegenden Fehlers abgeschätzt und dem Bedienungspersonal zur Kenntnis gebracht werden kann.

Die Ausführungsbeispiele gemäss Anspruch 5 stellen einfache Lösungen zur intuitiv leicht erfassbaren Darstellung der Ergebnisse der Plausibilitätsprüfung dar.

Das Ausführungsbeispiel gemäss Anspruch 6 hat den Vorteil, dass sowohl Fehler bei Spannungswandlern als in der Schaltanlage selber erkannt werden können.

Das Ausführungsbeispiel gemäss Anspruch 7 hat den Vorteil, dass durch Schalthandlungen bedingte Inkonsistenzen zwischen Spannungs-Messsignalen von tatsächlich fehlerbedingten Inkonsistenzen unterschieden werden können.

Das Ausführungsbeispiel gemäss Anspruch 8 hat den Vorteil, dass mehrere Phasen gleichzeitig mit geringem Aufwand überwacht werden können.

In weiteren Aspekten betrifft die Erfindung ein Computerprogrammprodukt und ein Computerprogramm zur Plausibilitätsüberprüfung von Spannungswandlern, wobei die Verfahrenschritte gemäss den Ansprüchen 1-6 durch Programmcode implementiert sind, desweiteren eine Vorrichtung zur Ausführung des Verfahrens und eine Schaltanlage umfassend die Vorrichtung.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNGEN

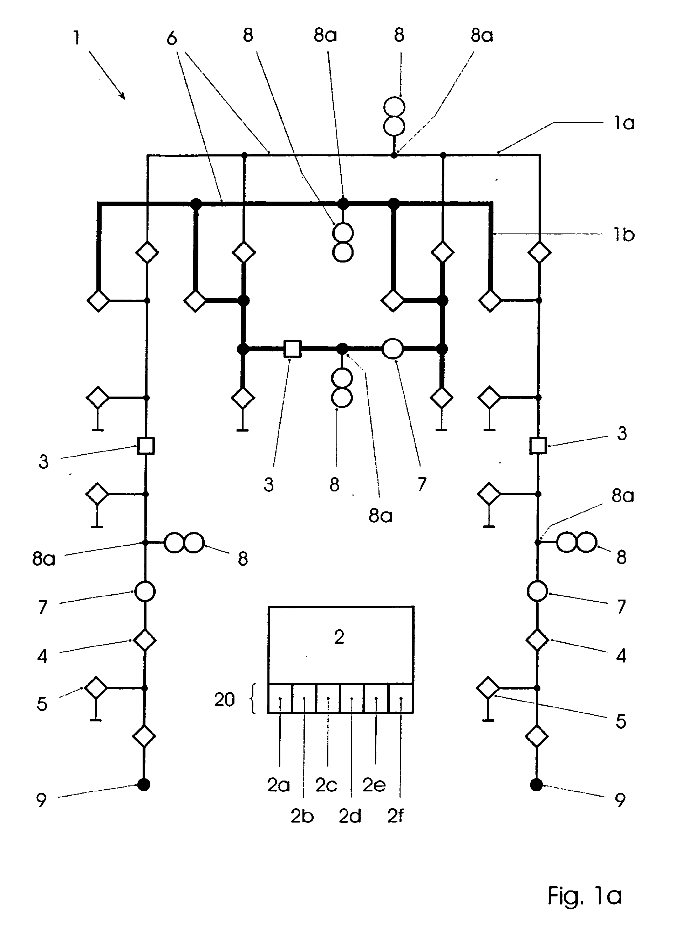

- Fig. 1a: zeigt ein einpoliges Schema in einem ersten, durch Schalterstellungen definierten topologischen Zustand und

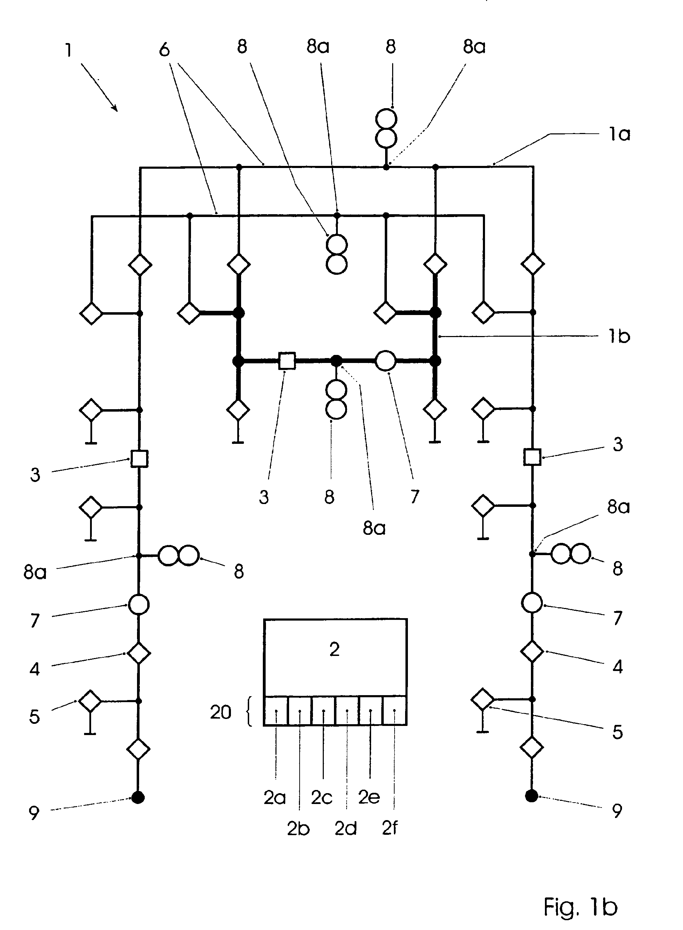

- Fig. 1b: zeigt das einpoliges Schema in einem zweiten topologischen Zustand.

In den Figuren sind gleiche Teile mit gleichen Bezugszeichen versehen.

### WEGE ZUR AUSFÜHRUNG DER ERFINDUNG

Fig. 1a und 1b zeigen ein einpoliges Schema einer elektrischen Hochspannungs-Schaltanlage 1. Ein Anlagenleitsystem 2 der Schaltanlage 1 ist schematisch und ohne die Verbindungen zu den Primärgeräten 3-9 und ohne Bezugnahme auf seine räumliche Anordnung dargestellt. Mit 1a, 1b sind topologische Teilbereich oder Unterspannungsbereiche 1a, 1b bezeichnet, die sich aus der momentan angenommenen Stellung von Leistungsschaltern 3, Trennern 4 und Erdungstrennern 5 ergibt. Die Sammelschienen sind mit 6, die Stromwandler mit 7, die Spannungswandler mit 8 und die Abgänge mit 9 bezeichnet.

In Fig. 1a ist eine erste momentane Topologie mit einem ersten Teilbereichen 1a und einem zweiten Teilbereich 1b dargestellt. Der zweite Teilbereich 1b umfasst je einen Spannungswandler 8 an den Abgängen 9 und einen Spannungswandler 8 an der Sammelschiene 6. Erfindungsgemäss werden die Messsignale der drei galvanisch zusammenhängenden Spannungswandler 8 miteinander verglichen und in Gruppen zusammengefasst. Die Gruppen sind durch ein Spannungsband charakterisiert, das durch den zulässigen Messfehler oder die erlaubte und typischerweise a priori bekannte Messungenauigkeit der Spannungswandler 8 gegeben ist. Wenn mehr als eine Gruppe gebildet wird, besteht ein Problem entweder bei einem Messwandler 8 oder im Teilbereich 1a. Im Teilbereich 1b sind zwei Spannungswandler 8 vorhanden, die ebenfalls auf Konsistenz geprüft werden. Weichen ihre Messwerte um mehr als die Messgenauigkeit voneinander ab, sind zwei Gruppen vorhanden und es wird ebenfalls ein Anzeige- oder Alarmsignal erzeugt. Fig. 1b zeigt einen zweiten topologischen Betriebszustand der Schaltanlage 1, bei dem im Teilbereich 1a vier Spannungswandler galvanisch verbunden sind. Der Übergang von Fig. 1a zu Fig. 1b geschieht dadurch, dass vom Anlagenleitsystem durch eine Topologieverfolgung festgestellt wird, welche Stellungen der Schalter 3-5 momentan aktuell sind.

Bei dem Verfahren werden also für jeden Teilbereich 1a oder 1b getrennt die erfassten Messsignale miteinander auf Übereinstimmung im Rahmen ihrer erlaubten Messungenauigkeiten verglichen und es werden solche Spannungswandler 8 identifiziert, deren Abweichungen von einem mehrheitlichen Übereinstimmungsbereich einen vorgebbaren Differenzwert überschreiten. Der Differenzwert ist typischerweise grösser oder gleich der Messungenauigkeit der Wandler 8. Mit anderen Worten, es wird für den Teilbereich 1a; 1b aufgrund der erfassten Messsignale und der erlaubten Messungenauigkeiten ein mutmasslich korrekter Spannungsmessbereich mit einer gewissen Wahrscheinlichkeit oder Plausibilität bestimmt und solche Spannungswandler 8 identifiziert, deren Messsignale aus dem zulässigen Spannungsmessbereich herausfallen.

Ausführungsbeispiele betreffen folgende Algorithmen oder Kriterien zur genaueren Zustandsbeurteilung der Spannungswandler 8: Bei genau einer Gruppe mit einem Spannungswandler 8 und genau einer Gruppe mit mehreren Spannungswandlern 8 wird der einzeln gruppierte Spannungswandler 8 als problematisch oder fehlerbehaftet beurteilt und mit einer Alarmmeldung versehen. Bei gleich grossen Gruppen oder bei mehr als zwei Gruppen gelten alle Spannungswandler 8 als mutmasslich problematisch. Bei einer grössten Gruppe mit mehreren Spannungswandlern 8 und mehreren Gruppen mit jeweils genau einem Spannungswandlern 8 werden alle Spannungswandler 8 der grössten Gruppe als fehlerfrei und die anderen Spannungswandler 8 als mutmasslich problematisch identifiziert.

Sind genau eine grössere und genau eine kleinere Gruppe von Spannungwandlern 8 vorhanden und hat die kleinere Gruppe mehr als einen Spannungswandler 8, dann wird der Teilbereich 1a; 1b der Schaltanlage 1 als mutmasslich problematisch identifiziert. Ist genau eine Gruppe mit mehr als einem Spannungswandler 8 vorhanden und ist die gemittelte Gruppenspannung ungleich Null, dann werden alle Warnmeldungen und/oder Alarmmeldungen für die Spannungswandler 8 der Gruppe und damit des Teilbereichs 1a, 1b und gegebenenfalls für den Teilbereich 1a; 1b zurückgesetzt.

Mehrere Spannungswandler 8 in einer nicht-grössten Gruppe gelten selber als problematisch oder ihr Teilbereich 1a, 1b gilt als problematisch. In diesem Fall können diese Spannungswandler 8 auf Konsistenz ihrer Messwert-Parametrisierung und insbesondere ihrer Messwert-Skalierung geprüft werden. Bei konsistenten Messsignalen innerhalb dieser Gruppe wird ein Warnsignal für Fehlerspannung im Teilbereich 1a; 1b der Schaltanlage 1, insbesondere ein Warnsignal für Kurzschluss oder Teilkurzschluss, generiert. Für Teilbereiche 1b mit maximal zwei Spannungswandlern 8 können zusätzlich lokale Plausibilitätstests durchgeführt werden.

Als problematisch identifizierte Spannungswandler 8 einer Gruppe können mit einer Warnmeldung versehen werden und ihre Gruppenzugehörigkeit kann markiert werden. Auch können Spannungswandler 8, die mehrmals hintereinander, insbesondere bei Zuordnung in unterschiedlichen Teilbereichen 1a, 1b als problematisch identifiziert wurden, mit einer Alarmmeldung versehen werden.

Die Ergebnisse der Plausibilitätsprüfung können in Form einer Liste der Spannungswandler 8 mit ihrer Gruppenzuordnung, einer Statistik, wie häufig jeder Spannungswandler 8 als problematisch identifiziert wurde, und/oder als graphische, insbesondere farbliche, Angabe in einem einpoligen Schema der Schaltanlage 1 dargestellt werden.

In einem anderen Aspekt betrifft die Erfindung ein Computerprogrammprodukt zur Plausibilitätsüberprüfung von Spannungswandlern 8 in einer elektrischen Schaltanlage 1, umfassend ein computerlesbares Medium und computerlesbare Programmcodemittel, welche bei Ausführung auf einem Datenverarbeitungsmittel eines Anlagenleitsystems 2 der elektrischen Schaltanlage 1 das Datenverarbeitungsmittel zur Ausführung des oben dargestellten Verfahrens bringen. Ferner wird beansprucht ein Computerprogramm zur Plausibilitätsüberprüfung von Spannungswandlern 8 in einer elektrischen Schaltanlage 1, das auf einer Datenverarbeitungseinheit eines Anlagenleitsystems 2 der Schaltanlage 1 ladbar und ausführbar ist, wobei das Computerprogramm bei Ausführung die Schritte des oben dargestellten Verfahrens ausführt.

Die Plausibilitätsprüfung der Spannungswandler 8 kann unbeachtlich eventueller Schalthandlungen ausgeführt und bei durch Schalthandlungen verursachten Inkonsistenzen der Messsignale wiederholt werden oder sie kann nur ausgeführt oder ausgewertet werden, wenn eine vorherige Überprüfung auf momentane Schalthandlungen negativ ausgefallen ist.

Ferner kann die Plausibilitätsprüfung der Spannungswandler 8 für jede Phase separat oder für verschiedene Phasen abwechselnd, insbesondere zyklisch abwechselnd, oder für Durchschnittswerte mindestens zweier Phasen, insbesondere aller Phasen, durchgeführt werden. Sie kann bei Inbetriebnahme von Spannungswandlern 8 zur frühzeitigen Erkennung von Inkonsistenzen ihrer Messwert-Parametrisierung und/oder im Betriebszustand der Schaltanlage 1 periodisch und/oder nach jeder Änderung der momentanen Topologie durchgeführt werden. Insbesondere kann sie in jedem Teilbereich 1a; 1b der Schaltanlage 1 durchgeführt werden.

In einem anderen Ausführungsbeispiel wird eine Sammelschienenspannung in einem Teilbereich 1a; 1b dadurch bestimmt, dass die Messsignale von mindestens zwei als fehlerfrei identifizierten Spannungswandlern 8, nämlich z. B. in Fig. 1a den an den Abgängen 9 angeordneten Wandlern 8, des Teilbereichs 1a gemittelt werden. Dadurch kann der dritte Wandler 8 an der Sammelschiene 6 überflüssig sein.

In einem weiteren Aspekt betrifft die Erfindung eine Vorrichtung 20 zur Ausführung des Verfahrens zur Plausibilitätsüberprüfung von Spannungswandlern 8. Die Vorrichtung umfasst Mittel 2a zum Erfassen der momentanen Schaltanlagen-Topologie, Mittel 2b zum Erkennen mindestens eines topologischen Teilbereichs 1a; 1b der Schaltanlage 1 mit mindestens zwei galvanisch zusammenhängende Spannungswandlern 8, Mittel 2c zum Klassifizieren der Spannungswandler 8 des Teilbereichs 1a; 1b in Gruppen mit innerhalb der Messgenauigkeit übereinstimmenden Messsignalen, und Mittel 2d zum Erzeugen eines Anzeige- oder Alarmsignals, wenn mehr als eine Gruppe vorhanden ist. Bevorzugt umfasst die Vorrichtung 20 Mittel 2e zur Zustandsbeurteilung der Spannungswandler 8 und/oder der Schaltanlage 1 gemäss den oben genannten Algorithmen oder Kriterien und/oder Mittel 2f zur Ausführung des oben dargestellten Verfahrens.

Die Vorrichtung 20 kann ein mit dem Anlagenleitsystem 2 verbindbares Stationsüberwachungsgerät 20 sein oder sie kann in einer Bedienungsschnittstelle des Anlagenleitsystems 2 integriert sein. Ferner können sämtliche genannte Vorrichtungsmittel 2a-2f in Hardware und/oder Software implementiert sein.

Die Erfindung erstreckt sich auch auf eine elektrische Schaltanlage 1, die eine solche Vorrichtung 20 umfasst.

### BEZUGSZEICHENLISTE

- 1: Elektrische Schaltanlage
- 1a, 1b: Teilbereiche der Topologie
- 2: Anlagenleitsystem
- 20: Vorrichtung zur Plausibilitätsüberprüfung
- 2a: Mittel zur Topologieerfassung
- 2b: Mittel zum Erkennen eines Teilbereichs
- 2c: Mittel zur Wandlerklassifizierung
- 2d: Mittel zur Signalerzeugung
- 2e: Mittel zur Zustandsbeurteilung der Wandler
- 2f: Ausführungsmittel
- 3: Leistungsschalter
- 4: Trenner
- 5: Trenner-Erder
- 6: Sammelschiene
- 7: Stromwandler
- 8: Spannungswandler
- 8a: Messstelle eines Spannungswandlers
- 9: Abgänge

## Patentansprüche

1. Verfahren zur Plausibilitätsüberprüfung von Spannungswandlern (8) in einer elektrischen Schaltanlage (1), insbesondere einer Hoch- oder Mittelspannungsschaltanlage (1), wobei die Schaltanlage (1) durch ein Anlagenleitsystem (2) gesteuert wird und Messsignale von an mindestens zwei unterschiedlichen Messstellen (8a) angeordneten Spannungswandlern (8) vom Anlagenleitsystem (2) verarbeitet werden, **dadurch gekennzeichnet, dass** zur Plausibilitätsprüfung der Spannungswandler (8)
a) eine momentane Topologie der Schaltanlage (1) aufgrund der vorhandenen elektrischen Verbindungen von Primärgeräten (3-9) und aufgrund momentaner Stellungen von Schaltern (3-5) vom Anlagenleitsystem (2) erfasst wird,
b) aufgrund der momentanen Topologie mindestens ein Teilbereich-(1a; 1b) der Schaltanlage (1) identifiziert wird, der mindestens zwei galvanisch zusammenhängende Spannungswandler (8) aufweist,
c) innerhalb des Teilbereichs (1a; 1b) die Spannungswandler (8) aufgrund ihrer Messsignale in Gruppen eingeteilt werden, wobei in jeder Gruppe alle Messsignale im Rahmen der erlaubten Messungenauigkeiten übereinstimmen, und
d) bei Vorhandensein von mehr als einer Gruppe ein Anzeige- oder Alarmsignal vom Anlagenleitsystem (2) generiert wird.

2. Das Verfahren nach Anspruch 1, **dadurch gekennzeichnet, dass** bei Vorhandensein des Anzeige- oder Alarmsignals eine Anzahl Spannungswandler (8) in jeder Gruppe bestimmt wird und folgende Kriterien zur Zustandsbeurteilung der Spannungswandler (8) angewandt werden:
a) Sind genau zwei Gruppen vorhanden und enthält die erste Gruppe genau einen Spannungswandler (8) und die zweite Gruppe mehr als einen Spannungswandler (8), dann wird der Spannungswandler (8) der ersten Gruppe als problematisch identifiziert und mit einer Alarmmeldung versehen; und/oder
b) Sind mindestens zwei gleich grosse Gruppen oder mehr als zwei Gruppen vorhanden, dann werden alle Spannungswandler (8) als problematisch identifiziert; und/oder
c) Sind eine grösste Gruppe mit mehreren Spannungswandlern (8) und mehrere Gruppen mit jeweils genau einem Spannungswandler (8) vorhanden, dann werden alle Spannungswandler (8) der grössten Gruppe als fehlerfrei und die anderen Spannungswandler (8) als problematisch identifiziert.

3. Das Verfahren nach Anspruch 2, **dadurch gekennzeichnet, dass** folgende Kriterien zur Zustandsbeurteilung der Spannungswandler (8) und/oder der Schaltanlage (1) angewandt werden:
a) Sind genau eine grössere und genau eine kleinere Gruppe von Spannungwandlern (8) vorhanden und hat die kleinere Gruppe mehr als einen Spannungswandler (8), dann wird der Teilbereich (1a; 1b) der Schaltanlage (1) als problematisch identifiziert und/oder
b) Ist genau eine Gruppe mit mehreren Spannungswandlern (8) vorhanden, die eine nicht verschwindende Spannung aufweisen, dann werden alle Warnmeldungen und/oder Alarmmeldungen für die Spannungswandler (8) der Gruppe und gegebenenfalls für den Teilbereich (1a; 1b) zurückgesetzt.

4. Das Verfahren nach einem der Ansprüche 2-3, **dadurch gekennzeichnet, dass**
a) als problematisch identifizierte Spannungswandler (8) einer Gruppe mit einer Warnmeldung versehen werden und ihre Gruppenzugehörigkeit markiert wird und/oder
b) Spannungswandler (8), die bei Zuordnung in unterschiedliche Teilbereiche (1a; 1b) mehrmals hintereinander als problematisch identifiziert wurden, mit einer Alarmmeldung versehen werden.

5. Das Verfahren nach einem der Ansprüche 2-4, **dadurch gekennzeichnet, dass** Ergebnisse der Plausibilitätsprüfung in Form einer Liste der Spannungswandler (8) mit ihrer Gruppenzuordnung, einer Statistik, wie häufig jeder Spannungswandler (8) als problematisch identifiziert wurde, und/oder als graphische, insbesondere farbliche, Angabe in einem einpoligen Schema der Schaltanlage (1) dargestellt werden.

6. Das Verfahren nach einem der vorangehenden Ansprüche, **dadurch gekennzeichnet, dass** folgendes Kriterium angewandt wird: Enthält eine Gruppe, die nicht eine grösste Gruppe ist, mehrere Spannungswandler (8), werden die Spannungswandler (8) dieser Gruppe auf Inkonsistenzen ihrer Messwert-Parameter, insbesondere ihrer Messwert-Skalierung, geprüft und gegebenenfalls korrigiert und/oder es wird bei konsistenten Messsignalen innerhalb dieser Gruppe ein Warnsignal für Fehlerspannung im Teilbereich (1a; 1b) der Schaltanlage (1), insbesondere ein Warnsignal für Kurzschluss oder Teilkurzschluss, generiert.

7. Das Verfahren nach einem der vorangehenden Ansprüche, **dadurch gekennzeichnet, dass**
a) die Plausibilitätsprüfung der Spannungswandler (8) unbeachtlich eventueller Schalthandlungen ausgeführt und bei durch Schalthandlungen verursachten Inkonsistenzen der Messsignale wiederholt wird oder
b) die Plausibilitätsprüfung der Spannungswandler (8) nur ausgeführt oder ausgewertet wird, wenn eine vorherige Überprüfung auf momentane Schalthandlungen negativ ausgefallen ist.

8. Das Verfahren nach einem der vorangehenden Ansprüche, **dadurch gekennzeichnet, dass** die Plausibilitätsprüfung der Spannungswandler (8) für jede Phase separat oder für verschiedene Phasen abwechselnd, insbesondere zyklisch abwechselnd, oder für Durchschnittswerte mindestens zweier Phasen, insbesondere aller Phasen, durchgeführt wird.

9. Das Verfahren nach einem der vorangehenden Ansprüche, **dadurch gekennzeichnet, dass**
a) die Plausibilitätsprüfung bei Inbetriebnahme von Spannungswandlern (8) zur frühzeitigen Erkennung von Inkonsistenzen ihrer Messwert-Parametrisierung durchgeführt wird und/oder
b) die Plausibilitätsprüfung im Betriebszustand der Schaltanlage (1) periodisch und/oder nach jeder Änderung der momentanen Topologie durchgeführt wird und/oder
c) die Plausibilitätsprüfung in jedem Teilbereich (1a; 1b) der Schaltanlage (1) durchgeführt wird.

10. Das Verfahren nach einem der vorangehenden Ansprüche, **dadurch gekennzeichnet, dass** eine Sammelschienenspannung in einem Teilbereich (1a; 1b) dadurch bestimmt wird, dass die Messsignale von mindestens zwei als fehlerfrei identifizierten Spannungswandlern (8) des Teilbereichs (1a; 1b) gemittelt werden.

11. Das Verfahren nach einem der vorangehenden Ansprüche, **dadurch gekennzeichnet, dass** insbesondere für Teilbereiche (1b) mit maximal zwei Spannungswandlern (8) zusätzlich lokale Plausibilitätstests durchgeführt werden.

12. Computerprogrammprodukt zur Plausibilitätsüberprüfung von Spannungswandlern (2) in einer elektrischen Schaltanlage (1), umfassend ein computerlesbares Medium und computerlesbare Programmcodemittel, welche bei Ausführung auf einem Datenverarbeitungsmittel eines Anlagenleitsystems (2) der elektrischen Schaltanlage (1) das Datenverarbeitungsmittel zur Ausführung des Verfahrens nach einem der Ansprüche 1-6 bringen.

13. Computerprogramm zur Plausibilitätsüberprüfung von Spannungswandlern (8) in einer elektrischen Schaltanlage (1), das auf einer Datenverarbeitungseinheit eines Anlagenleitsystems (2) der Schaltanlage (1) ladbar und ausführbar ist, **dadurch gekennzeichnet, dass** das Computerprogramm bei Ausführung die Schritte des Verfahrens nach einem der Ansprüche 1-6 ausführt.

14. Vorrichtung (20) zur Plausibilitätsüberprüfung von Spannungswandlern (8) in einer elektrischen Schaltanlage (1), insbesondere zur Ausführung des Verfahrens nach einem der Ansprüche 1-11, **gekennzeichnet durch** das Vorhandensein von
a) Mitteln (2a) zum Erfassen einer momentanen Topologie der Schaltanlage (1) aufgrund der vorhandenen elektrischen Verbindungen von Primärgeräten (3-9) und aufgrund momentaner Stellungen von Schaltern (3-5),
b) Mitteln (2b) zum Erkennen mindestens eines topologischen Teilbereichs (1a; 1b) der Schaltanlage (1), der mindestens zwei galvanisch zusammenhängende Spannungswandler (8) aufweist,
c) Mitteln (2c) zum Klassifizieren der Spannungswandler (8) des Teilbereichs (1a; 1b) in Gruppen, wobei in jeder Gruppe alle Messsignale der Spannungswandler (8) im Rahmen der erlaubten Messungenauigkeiten übereinstimmen, und
d) Mitteln (2d) zum Erzeugen eines Anzeige- oder Alarmsignals, wenn mehr als eine Gruppe vorhanden ist.

15. Vorrichtung (20) nach Anspruch 14, **dadurch gekennzeichnet, dass**
a) Mittel (2e) zur Zustandsbeurteilung der Spannungswandler (8) und/oder der Schaltanlage (1) gemäss den Kriterien nach Anspruch 2 oder Anspruch 3 vorhanden sind und/oder
b) Mittel (2f) zur Ausführung des Verfahrens nach einem der Ansprüche 3-8, 9c, 10-11 vorhanden sind.

16. Vorrichtung (20) nach einem der Ansprüche 14-15, **dadurch gekennzeichnet, dass**
a) die Vorrichtung (20) ein mit dem Anlagenleitsystem (2) verbindbares Stationsüberwachungsgerät (20) ist oder in einer Bedienungsschnittstelle des Anlagenleitsystems (2) integriert ist und/oder
b) dass die genannten Mittel (2a-2f) der Vorrichtung (20) in Hardware und/oder Software implementiert sind.

17. Elektrische Schaltanlage (1), insbesondere Hoch- oder Mittelspannungsschaltanlage (1), **gekennzeichnet durch** eine Vorrichtung (20) nach einem der Ansprüche 14-16.

## Claims

1. A method for a plausibility check of voltage converters (8) in an electrical switching station (1), and in particular a high or medium voltage switching station (1), wherein
the switching station (1) is controlled by means of a station control system (2) and measurement signals from voltage converters (8) arranged at at least two different measurement locations (8a) are processed by the station control system (2),
**characterised in that** for the plausibility check of the voltage converters
a) a current topology of the switching station (1) on the basis of the electrical connections of primary units (3-9) present, and on the basis of current settings of switches (3-5) is recorded by the station control system (2),
b) on the basis of the current topology at least one sub-region (1a; 1b) of the switching station (1) is identified, which has at least two galvanically related voltage converters (8),
c) within the sub-region (1a; 1b) the voltage converters (8) on the basis of their measurement signals are divided into groups, wherein in each group all measurement signals agree within the framework of the measurement inaccuracies allowed, and
d) if more than one group is present a display signal or an alarm signal is generated by the station control system (2).

2. The method according to Claim 1,
**characterised in that** if the display signal or alarm signal is present a number of voltage converters (8) in each group is determined and the following criteria are applied for the assessment of the state of the voltage converters (8):
a) If exactly two groups are present, and the first group contains exactly one voltage converter (8) and the second group contains more than one voltage converter (8) then the voltage converter (8) of the first group is identified as problematical, and is allocated an alarm message; and/or
b) If at least two groups of equal size or more than two groups are present, then all voltage converters (8) are identified as problematical; and/or
c) If a largest group is present with a plurality of voltage converters (8) and a plurality of groups is present with in each case exactly one voltage converter (8), then all the voltage converters (8) of the largest group are identified as free of defects, and the other voltage converters (8) are identified as problematical.

3. The method according to Claim 2,
**characterised in that** the following criteria are applied for the assessment of the state of the voltage converters (8) and/or of the switching station (1) :
a) If exactly one larger group and exactly one smaller group of voltage converters (8) are present, and the smaller group has more than one voltage converter (8), then the sub-region (1a; 1b) of the switching station (1) is identified as problematical, and/or
b) If exactly one group with a plurality of voltage converters (8) is present, which have a non-disappearing voltage, then all warning messages and/or alarm messages for the voltage converters of the group, and if necessary for the sub-region (1a; 1b), are reset.

4. The method according to one of the Claims 2-3,
**characterised in that**
a) voltage converters (8) of one group identified as problematical are allocated a warning message, and their group relationship is tagged and/or
b) voltage converters (8), which when assigned to different sub-regions (1a, 1b) have repeatedly been identified as problematical in sequence, are allocated an alarm message.

5. The method according to one of the Claims 2-4,
**characterised in that** results of the plausibility check are represented in the form of a list of the voltage converters (8) with their group assignment, a statistic as to how often each voltage converter (8) has been identified as problematical, and/or as a graphic, in particular a coloured, display in a single-pole schematic of the switching station (1).

6. The method according to one of the previous claims,
**characterised in that** the following criterion is applied: If a group, which is not a largest group, contains a plurality of voltage converters (8), the voltage converters (8) of this group are checked and if necessary corrected for inconsistencies of their measurement parameters, in particular the scaling of their measurements, and/or in the event of consistent measurement signals within this group a warning signal is generated regarding a defective voltage in the sub-region (1a, 1b) of the switching station (1), in particular a warning signal regarding a short-circuit or a partial short-circuit.

7. The method according to one of the previous claims,
**characterised in that**
a) the plausibility check of the voltage converters (8) is performed without regard to any switching operations, and in the event of inconsistencies of the measurement signals caused by switching operations is repeated, or
b) the plausibility check of the voltage converters (8) is only performed or analysed if a preceding check for any current switching operations has proved to be negative.

8. The method according to one of the previous claims,
**characterised in that** the plausibility check of the voltage converters (8) is performed for each phase separately, or for different phases by turns, in particular by turns in a cycle, or is performed for average values of at least two phases, in particular of all phases.

9. The method according to one of the previous claims,
**characterised in that**
a) in the event of commissioning of voltage converters (8) the plausibility check is performed for the early detection of inconsistencies in the parameterisation of their measurements, and/or
b) the plausibility check is performed periodically in the operating state of the switching station (1), and/or after each modification of the current topology, and/or
c) the plausibility check is performed in each sub-region (1a, 1b) of the switching station (1).

10. The method according to one of the previous claims,
**characterised in that** a bus voltage in a sub-region (1a, 1b) is determined **in that** the measurement signals of at least two voltage converters (8) of the sub-region (1a, 1b), identified as free of defects, are averaged.

11. The method according to one of the previous claims,
**characterised in that** in particular for sub-regions (1b) with a maximum of two voltage converters (8) local plausibility tests are in addition performed.

12. A computer program product for the plausibility checking of voltage converters (8) in an electrical switching station (1), comprising a computer-readable medium and a computer-readable means of program coding, which when execution takes place on a data processing means of a station control system (2) of the electrical switching station (1), provide the data processing means for the execution of the method according to one of the Claims 1-6.

13. The computer program for the plausibility checking of voltage converters (8) in an electrical switching station (1), which can be loaded and executed on a data processing unit of a station control system (2) of the switching station (1),
**characterised in that** the computer program, when executing the steps of the method, executes these in accordance with one of the Claims 1-6.

14. A device (20) for plausibility checking of voltage converters (8) in an electrical switching station (1), in particular for the execution of the method in accordance with one of the Claims 1-11, **characterised by** the presence of
a) A means (2a) for the recording of a current topology of the switching station (1) on the basis of the electrical connections of primary units (3-9) present, and on the basis of current settings of switches (3-5),
b) A means (2b) for the detection of at least one topological sub-region (1a; 1b) of the switching station (1), which has at least two galvanically related voltage converters (8),
c) A means (2c) for the classification of the voltage converters (8) of the sub-region (1a; 1b) into groups, wherein in each group all measurement signals of the voltage converters (8) agree within the framework of the measurement inaccuracies allowed, and
d) A means (2d) for the generation of a display signal or an alarm signal, if more than one group is present.

15. The device (20) according to Claim 14,
**characterised in that**
a) means (2e) are present for the evaluation of the states of the voltage converters (8), and/or of the switching station (1) in accordance with the criteria according to Claim 2 or Claim 3, and/or
b) means (2f) are present for the execution of the method in accordance with one of the Claims 3-8, 9c, 10-11.

16. The device (20) according to one of the Claims 14-15,
**characterised in that**
a) the device (20) is a station monitoring unit (20) that can be connected with the station control system (2), or is integrated in an operating interface of the station control system (2), and/or
b) **in that** the means cited (2a-2f) of the device (20) are implemented in hardware and/or software.

17. An electrical switching station (1), in particular a high or medium voltage switching station (1),
**characterised by** a device (20) according to one of the Claims 14-16.

## Revendications

1. Procédé de test de validité pour des transformateurs de tension (8) ans une installation de distribution d'énergie (1) électrique, notamment une installation de distribution d'énergie à haute ou moyenne tension (1), dans lequel l'installation de distribution d'énergie (1) est commandée par un système de gestion électronique d'installation (2) et des signaux de mesure de transformateurs de tension (8) disposés à au moins deux emplacements de mesure (8a) différents sont traités par le système de gestion électronique d'installation (2), **caractérisé en ce que** afin de tester la validité du transformateur de tension (8)
a) une topologie à l'instant présent de l'installation de distribution d'énergie (1) est détectée sur la base des liaisons électriques présentes par des appareils primaires (3-9) et sur la base des positions à l'instant présent des commutateurs (3-5) par le système de gestion électronique d'installation (2),
b) sur la base de la topologie à l'instant présent, au moins une zone partielle (1a ;1b) de l'installation de distribution d'énergie (1) est identifiée, laquelle présente au moins deux transformateurs de tension (8) solidarisés de manière galvanique,
c) à l'intérieur de la zone partielle (1a ; 1b), les transformateurs de tension (8) sont divisés en groupes sur la base de leurs signaux de mesure, moyennant quoi dans chaque groupe tous les signaux de mesure concordent dans le cadre des précisions de mesure autorisées, et
d) en présence de plus d'un groupe, un signal d'affichage ou un signal d'alarme est généré par le système de gestion électronique d'installation (2).

2. Procédé selon la revendication 1, **caractérisé en ce que** en présence du signal d'affichage ou du signal d'alarme, une pluralité de transformateurs de tension (8) dans chaque groupe est déterminée et les critères suivants d'évaluation de l'état du transformateur de tension (8) sont employés :
a) si exactement deux groupes sont présent et le premier groupe contient exactement un transformateur de tension (8) et le deuxième groupe contient plus d'un transformateur de tension (8), alors le transformateur de tension (8) du premier groupe est identifié comme problématique et pourvu d'une signalisation d'alarme ; et/ou
b) si au moins deux groupes de même taille ou plus de deux groupes sont présents, alors tous les transformateurs de tension (8) sont identifiés comme problématiques ; et/ou
c) si un groupe le plus grand avec plusieurs transformateurs de tension (8) et plusieurs groupes avec respectivement exactement un transformateur de tension (8) sont présents, alors tous les transformateurs de tension (8) du groupe le plus grand sont identifiés comme corrects et les autres transformateurs de tension (8) sont identifiés comme problématiques.

3. Procédé selon la revendication 2, **caractérisé en ce que** les critères suivants pour l'évaluation de l'état du transformateur de tension (8) et/ou de l'installation de distribution d'énergie (1) sont employés :
a) si exactement un groupe plus grand et exactement un groupe plus petit de transformateurs de tension (8) est présent et le groupe plus petit comporte plus d'un transformateur de tension (8), alors la zone partielle (1a ;1b) de l'installation de distribution d'énergie (1) est identifié comme problématique et/ou
b) si exactement un groupe avec plusieurs transformateurs de tension (8) est présent, lesquels présentent une tension non évanescente, alors toutes les signalisation d'alerte et/ou signalisations d'alarme pour le transformateur de tension (8) du groupe et le cas échéant pour la zone partielle (1a ;1b) sont réinitialisées.

4. Procédé selon une des revendications 2 à 3, **caractérisé en ce que**
a) les transformateurs de tension (8) identifiés comme problématiques d'un groupe sont pourvus d'une signalisation d'alerte et leur appartenance au groupe est marquée et/ou
b) les transformateurs de tension (8), qui lors de l'affectation dans des zones partielles (1a ;1b) différentes ont été identifiés comme problématiques plusieurs fois successives, sont pourvus d'une signalisation d'alarme.

5. Procédé selon une des revendications 2 à 4, **caractérisé en ce que** les résultats des tests de validité sont représentés sous la forme d'une liste des transformateurs de tension (8) avec leur affectation à un groupe, d'une statistique de la fréquence à laquelle chaque transformateur de tension (8) a été identifié comme problématique et/ou comme des données graphiques, notamment colorées, dans un schéma unipolaire de l'installation de distribution d'énergie (1).

6. Procédé selon une des revendications précédentes, **caractérisé en ce que** le critère suivant est employé : si un groupe, qui n'est pas un groupe le plus grand, contient plusieurs transformateurs de tension (8), les transformateurs de tension (8) de ce groupe sont testés afin de rechercher les incohérences de leurs paramètres de valeurs de mesure, notamment de leur échelle des valeurs de mesure, et le cas échéant corrigés et/ou en présence de signaux de mesure cohérents à l'intérieur de ce groupe, un signal d'alerte d'une tension incorrecte dans la zone partielle (1a ;1b de l'installation de distribution d'énergie (1), notamment un signal d'alerte d'un court-circuit ou d'un court-circuit partiel, est généré.

7. Procédé selon une des revendications précédentes, **caractérisé en ce que**
a) le test de validité du transformateur de tension (8) est exécuté sans tenir compte d'éventuelles manoeuvres et est répété en présence d'incohérences des signaux de mesure provoquées par des manoeuvres ou
b) le test de validité du transformateur de tension (8) est seulement exécuté ou évalué, lorsque un test précédent est apparu négatif en raison de manoeuvres à l'instant présent.

8. Procédé selon une des revendications précédentes, **caractérisé en ce que** le test de validité du transformateur de tension (8) est exécuté pour chaque phase séparément ou en alternance pour différentes phases, notamment en alternance cyclique ou pour des valeurs moyennes d'au moins deux phases, notamment de toutes les phases.

9. Procédé selon une des revendications précédentes, **caractérisé en ce que**
a) le test de validité est exécuté lors de la mise en service des transformateurs de tension (8) afin de reconnaître précocement des incohérences de leurs paramétrage de valeurs de mesure et/ou
b) le test de validité est exécuté périodiquement en l'état de fonctionnement de l'installation de distribution d'énergie (1) et/ou après chaque modification de la topologie à l'instant présent et/ou
c) le test de validité est exécuté dans chaque zone partielle (1a ; 1b) de l'installation de distribution d'énergie (1).

10. Procédé selon une des revendications précédentes, **caractérisé en ce que** une tension de barres collectrices dans une zone partielle (1a ;1b) est déterminée en calculant la moyenne des signaux de mesure par au moins deux transformateurs de tension (8) de la zone partielle (1a ;1b) identifiés comme fonctionnant correctement.

11. Procédé selon une des revendications précédentes, **caractérisé en ce que** notamment pour la zone partielle (1b) avec au maximum deux transformateurs de tension (8), des tests de validité locaux supplémentaires sont effectués.

12. Produit de programme informatique pour tester la validité de transformateurs de tension (8)dans une installation de distribution d'énergie (1) électrique, comprenant un support lisible par un ordinateur et des moyens de code de programme lisibles par un ordinateur, qui lorsqu'ils sont exécutés sur un moyen de traitement de données d'un système de gestion électronique d'installation (2) de l'installation de distribution d'énergie (1) électrique amènent le moyen de traitement de données à mettre en oeuvre le procédé selon une des revendications 1 à 6.

13. Programme informatique pour tester la validité de transformateurs de tension (8) dans une installation de distribution d'énergie (1) électrique, qui peut être chargé et exécuté sur une unité de traitement de données d'un système de gestion électronique (2) de l'installation de distribution d'énergie (1), **caractérisé en ce que** le programme informatique exécute lors de la mise en oeuvre les étapes du procédé selon une des revendications 1 à 6.

14. Dispositif (20) de test de validité pour les transformateurs de tension (8) dans une installation de distribution d'énergie (1) électrique, notamment pour mettre en oeuvre le procédé selon une des revendications 1 à 11, **caractérisé par** la présence de
a) Moyens (2a) pour détecter une topologie à l'instant présent de l'installation de distribution d'énergie (1) sur la base des liaisons électriques présentes des appareils primaires (3-9) et sur la base des positions à l'instant présent des commutateurs (3-5),
b) Moyens (2b) pour reconnaître au moins une zone partielle topologique (1a ; 1b) de l'installation de distribution d'énergie (1), qui présent au moins deux transformateurs de tension (8) solidarisés de manière galvanique,
c) Moyens (2c) pour classifier les transformateurs de tension (8) de la zone partielle (1a ; 1b) en groupes, moyennant quoi dans chaque groupe tous les signaux de mesure des transformateurs de tension (8) concordent dans le cadre des précisions de mesure autorisées, et
d) Moyens (2d) pour produire un signal d'affichage ou un signal d'alarme, lorsque plus d'un groupe est présent.

15. Dispositif (20) selon la revendication 14, **caractérisé par**
a) des moyens (2e) pour évaluer l'état du transformateur de tension (8) et/ou de l'installation de distribution d'énergie (1) selon les critères de la revendication 2 ou 3 sont présents et/ou
b) des moyens (2f) pour mettre en oeuvre le procédé selon une des revendications 3 à 8, 9c, 10-11 sont présents.

16. Dispositif (20) selon une des revendications 14 à 15, **caractérisé en ce que**
a) le dispositif (20) est un appareil de surveillance de station (20) pouvant être relié au système de gestion électronique d'installation (2) ou est intégré dans une interface de commande du système de gestion électronique d'installation (2) et/ou
b) lesdits moyens (2a-2f) du dispositif (20) sont implémentés comme des installations matérielles et/ou des logiciels.

17. Installation de distribution d'énergie électrique (1), notamment installation de distribution d'énergie à haute ou moyenne tension (1), **caractérisée par** un dispositif (20) selon une des revendications 14 à 16.
